(19) Europäisches Patentamt / European Patent Office / Office européen des brevets

(11) **EP 4 082 739 B1**

(12) **EUROPEAN PATENT SPECIFICATION**

(45) Date of publication and mention of the grant of the patent:
**30.04.2025 Bulletin 2025/18**

(21) Application number: **20908259.3**

(22) Date of filing: **12.11.2020**

(51) International Patent Classification (IPC):
*B29C 65/02* (2006.01)  *B29K 105/06* (2006.01)
*B32B 5/28* (2006.01)  *B29C 70/20* (2006.01)
*B29C 70/42* (2006.01)  *B29C 70/54* (2006.01)

(52) Cooperative Patent Classification (CPC):
(C-Sets available)
**B29C 66/1122; B29C 65/02; B29C 66/3034;
B29C 66/45; B29C 66/721; B29C 66/7212;
B29C 66/72141; B29C 66/73751; B29C 66/73753;
B29C 66/7392; B29C 70/0035; B29C 70/20;
B29C 70/42;** B29C 66/341; B29C 70/54     (Cont.)

(86) International application number:
**PCT/JP2020/042312**

(87) International publication number:
**WO 2021/131382 (01.07.2021 Gazette 2021/26)**

(54) **COMPOSITE PREPREG AND FIBER-REINFORCED PLASTIC MOLDED BODY**

PREPREG UND FORMKÖRPER AUS FASERVERSTÄRKTEM KUNSTSTOFF

PRÉ-IMPRÉGNÉ ET CORPS MOULÉ EN PLASTIQUE RENFORCÉ DE FIBRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2019 JP 2019231596**

(43) Date of publication of application:
**02.11.2022 Bulletin 2022/44**

(73) Proprietor: **Toray Industries, Inc.
Tokyo 103-8666 (JP)**

(72) Inventors:
• **SHINOHARA, Kotaro**
Iyo-gun, Ehime 791-3193 (JP)
• **HONMA, Masato**
Iyo-gun, Ehime 791-3193 (JP)

(74) Representative: **Mewburn Ellis LLP
Aurora Building
Counterslip
Bristol BS1 6BX (GB)**

(56) References cited:
JP-A- 2007 283 758     JP-A- 2014 145 038
JP-A- 2014 152 403     JP-A- 2019 217 738
JP-U- 3 224 686     US-A1- 2016 271 906

(52) Cooperative Patent Classification (CPC): (Cont.)

C-Sets
**B29C 66/7212, B29K 2307/04;**
**B29C 66/7212, B29K 2309/08**

**Description**

TECHNICAL FIELD

The present invention relates to a composite prepreg formed by combining a thermoplastic resin layer and a thermosetting resin layer, and a fiber-reinforced plastic molded body obtained from the prepreg.

BACKGROUND ART

Fiber-reinforced composite materials in which a thermosetting resin or a thermoplastic resin is used as a matrix and is combined with reinforcing fibers such as carbon fibers or glass fibers are lightweight and have excellent mechanical characteristics such as strength and rigidity, heat resistance, and corrosion resistance, and therefore have been applied to many fields such as aerospace, automobiles, railway vehicles, ships, civil engineering and construction, and sporting goods.

These fiber-reinforced composite materials in which a thermosetting resin is used, however, are unsuitable for producing parts or structures having a complicated shape in a single molding step. In the above applications, it is necessary to produce a member made of a fiber-reinforced composite material and then to integrate the member with a member of the same kind or a different kind.

As a method for integrating members of the same kind as or different kinds from a fiber-reinforced composite material in which a thermosetting resin is used, a mechanical joining method using a bolt, a rivet, a screw, or the like, or a joining method using an adhesive has been conventionally used. The mechanical joining method has problems in which the production step is prolonged and a production cost is increased because the method requires a step of processing a joint such as creating holes in advance, and the strength of the material is deteriorated because of the holes. The joining method using an adhesive has problems in which the production step is prolonged because the method requires an adhesion step including preparation of an adhesive and coating of the adhesive and a curing step, and sufficient reliability in adhesion strength cannot be obtained.

To the fiber-reinforced composite material in which a thermoplastic resin is used as a matrix, a method for joining members by welding can be applied in addition to the mechanical joining method and the joining method using an adhesive described above, and therefore the time required for joining the members may possibly be shortened. On the other hand, when mechanical characteristics at a high temperature and excellent resistance to chemicals are required as in a structural member for aircrafts, the fiber-reinforced composite material in which a thermoplastic resin is used as a matrix has a problem that heat resistance and chemical resistance are not sufficient as compared with a fiber-reinforced composite material made of a thermosetting resin and reinforcing fibers.

Patent Document 1 discloses a method of integrating a member formed of a thermoplastic resin and a member formed of a fiber-reinforced composite material made of a thermosetting resin. That is, in the method described in the document, a fiber-reinforced composite material is obtained by stacking a thermoplastic resin film on a surface of a prepreg sheet made of reinforcing fibers and a thermosetting resin, then heating and pressurizing the film and sheet. Thereafter, the obtained fiber-reinforced composite material is put in a mold, a thermoplastic resin is injection-molded, and a thermoplastic resin member formed by the injection molding is joined to the fiber-reinforced composite material.

Patent Document 2 describes a discontinuous fiber-reinforced plastic sheet in which one surface is impregnated with a thermoplastic resin and the other surface is impregnated with an adhesive resin.

Patent Document 3 describes that a fiber-reinforced composite material is obtained by injecting and curing a thermosetting resin simultaneously with or after disposing a thermoplastic resin on a surface of a reinforcing fiber substrate. Such a fiber-reinforced composite material can be welded to another member at a surface of the thermoplastic resin.

Patent Document 4 describes a prepreg containing a thermoplastic resin in a range of a depth of 20% from a surface.

PRIOR ART DOCUMENTS

PATENT DOCUMENTS

Patent Document 1: Japanese Patent Laid-open Publication No. 10-138354
Patent Document 2: International Publication No. 2014/103658
Patent Document 3: Japanese Patent Laid-open Publication No. 2006-44261
Patent Document 4: Japanese Patent Laid-open Publication No. 2019-38939

## SUMMARY OF THE INVENTION

### PROBLEMS TO BE SOLVED BY THE INVENTION

Patent Document 1 describes a method for obtaining a fiber-reinforced composite material by disposing a molten thermoplastic resin substrate on a thermosetting prepreg, but the molten thermoplastic resin substrate is difficult to handle, and it is necessary to control molding conditions to combine the thermoplastic resin substrate and the thermosetting prepreg. In addition, since only the thermoplastic resin is present on a surface layer, it is difficult to control warpage.

The fiber-reinforced plastic sheet described in Patent Document 2 is a substrate having weldability in which a thermoplastic resin layer and an adhesive layer are firmly adhered to each other; since the reinforcing fibers constituting the sheet are discontinuous and in a nonwoven fabric shape, the mechanical properties as a substrate do not necessarily satisfy the requirements in the industrial field.

Patent Document 3 discloses a fiber-reinforced composite material in which a thermosetting resin is simultaneously or later injected into a reinforcing fiber sheet partially impregnated with a thermoplastic resin, but the fiber-reinforced composite material is for RTM molding, has no function as an uncured prepreg, has no flexibility, and thus does not satisfy the requirements as a substrate.

Patent Document 4 discloses a prepreg in which a thermoplastic resin is disposed on a surface layer, but the thermoplastic resin is not imparted for heat weldability and does not satisfy the requirement as a joining application.

From the above, it has been urgently required to provide a composite prepreg in which a fiber-reinforced thermoplastic resin layer and a thermosetting resin layer are firmly adhered to each other while exhibiting secondary weldability (thermal weldability) with another member, the composite prepreg being excellent in mechanical properties and handleability.

### SOLUTIONS TO THE PROBLEMS

The present invention for solving the above problems is defined in the appended independent claims 1 and 10. Further embodiments are disclosed in the dependent claims.

### EFFECTS OF THE INVENTION

The composite prepreg of the present invention, in which reinforcing fibers are dispersed not only in the thermosetting resin layer but also in the thermoplastic resin layer, exhibits excellent mechanical characteristics, has small warpage as a prepreg, and is excellent in handleability. In addition, since the thermoplastic resin layer and the thermosetting resin layer are firmly adhered to each other, the thermoplastic resin layer and the thermosetting resin layer are hardly peeled off during molding when a molded body is formed using the prepreg. Further, the prepreg of the present invention, which contains continuous reinforcing fibers in the thermoplastic resin layer, is excellent in secondary weldability with another member.

### BRIEF DESCRIPTION OF THE DRAWINGS

Fig. 1 is a schematic view showing how to take a cross section when calculating a roughness average length RSm and a roughness average height Rc of a curve formed by an interface of resin layers in a composite prepreg according to the present invention.
Fig. 2 is a schematic view of an observation cross section in the composite prepreg according to the present invention.
Fig. 3 is a schematic view of an observation cross section in the composite prepreg according to the present invention.

### EMBODIMENTS OF THE INVENTION

Hereinafter, the present invention will be described.

<Composite Prepreg>

A composite prepreg of the present invention (hereinafter, it may be simply referred to as "prepreg") is formed by impregnating reinforcing fibers with a thermoplastic resin and a thermosetting resin and forming a thermoplastic resin layer and a thermosetting resin layer that form an interface and are joined to each other, wherein the thermoplastic resin layer is present on a surface of the prepreg.

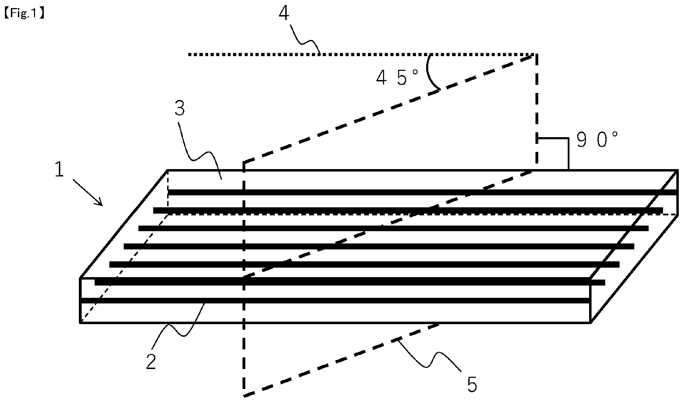

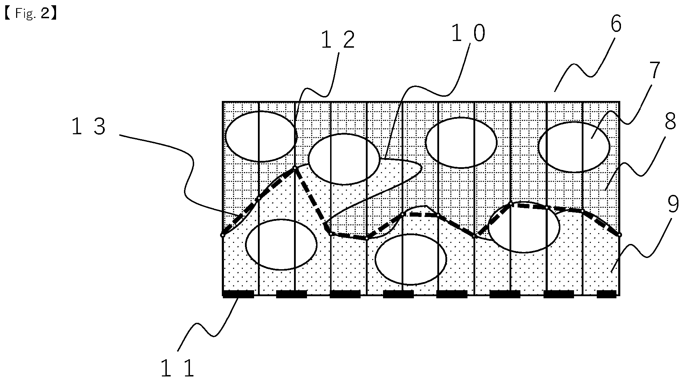

Fig. 2 shows an embodiment of the composite prepreg of the present invention and is a schematic view showing a cross section that forms an angle of 45 degrees with respect to the orientation direction of continuous reinforcing fibers 2 as shown in Fig. 1 and is cut perpendicularly to a plane direction of the composite prepreg (or molded body). In Fig. 2, many reinforcing fibers 7 are present while being oriented at an angle inclined by 45 degrees from the direction perpendicular to the paper surface. The group of the reinforcing fibers 7 is impregnated with a thermoplastic resin and a thermosetting resin to form a thermosetting resin layer 9 and a thermoplastic resin layer 8. The thermosetting resin layer 9 and the thermoplastic resin layer 8 are in contact with each other while forming an interface 10. As shown in Fig. 2, in the present invention, the thermoplastic resin layer 8 is present on at least one surface of the composite prepreg.

The thermoplastic resin layer contains continuous reinforcing fibers. The continuous reinforcing fibers may be continuous in at least one direction (for example, the longitudinal direction of the composite prepreg); when the continuous reinforcing fibers are continuous over the entire length, not only higher mechanical characteristics can be obtained, but also the prepreg is less likely to be broken during use, and handleability improves, which is preferable. In particular, when the prepreg is welded to another member via the thermoplastic resin layer, the reinforcing fibers contained in the thermoplastic resin layer being continuous reinforce the joining interface and improve the joining strength.

The reinforcing fibers contained in the thermoplastic resin layer may be partially divided in the middle, but it is preferable that 90 mass% or more of the reinforcing fibers be continuous reinforcing fibers. The reinforcing fibers contained in the thermoplastic resin layer may be partially divided in the middle, but the thermoplastic resin layer preferably has reinforcing fibers that are also continuous in the width direction of the composite prepreg.

Examples of a method for determining whether or not the reinforcing fibers contained in the thermoplastic resin layer are continuous reinforcing fibers include a method of cutting the obtained composite prepreg into 200 mm square, eluting the thermosetting resin with a solvent, removing exposed fibers, then burning off the thermoplastic resin by heating at 450°C for 30 minutes under a nitrogen atmosphere, and checking the remaining reinforcing fibers to perform the determination.

In the thermoplastic resin layer, the reinforcing fibers are preferably in a form of being arranged in one layer or a plurality of layers in a state of being oriented in one direction, or in a form of being arranged to form a woven fabric structure. To obtain a molded body that is lightweight and has higher durability, it is more preferable that reinforcing fibers be oriented in one direction and arranged in a plurality of layers.

On the other hand, the reinforcing fibers contained in the thermosetting resin layer may be continuous reinforcing fibers or discontinuous reinforcing fibers. In the case of continuous reinforcing fibers, the mechanical characteristics of the resulting composite prepreg improve, which is preferable. In the case of discontinuous reinforcing fibers, the flexibility of the resulting composite prepreg improves, and the shapability improves, which is preferable. From the viewpoint of mechanical characteristics, especially tensile strength, of the resulting composite prepreg, it is more preferable that the thermosetting resin layer contains continuous reinforcing fibers, and it is still more preferable that 90% or more of the reinforcing fibers contained in the thermosetting resin layer be continuous reinforcing fibers. Examples of a method for determining whether or not the reinforcing fibers contained in the thermosetting resin layer are continuous reinforcing fibers include a method of cutting the obtained composite prepreg into 200 mm square, eluting the thermosetting resin with a solvent, and collecting exposed fibers to perform the determination.

In the thermosetting resin layer, the reinforcing fibers are preferably present in any of a form in which reinforcing fibers cut into a certain length or an indefinite length are randomly oriented, a form in which reinforcing fibers cut into a certain length or an indefinite length are arranged with specific anisotropy, a form in which reinforcing fibers oriented in one direction are arranged in one layer or a plurality of layers, or a form in which reinforcing fibers are arranged to form a woven fabric structure. To obtain a molded body that is lightweight and has higher durability, it is more preferable that the reinforcing fibers be oriented in one direction and be arranged in a plurality of layers.

As the reinforcing fibers contained in the thermoplastic resin layer, those having a surface free energy of 10 to 50 mJ/m$^2$ as measured by a Wilhelmy plate method are preferably used. The reinforcing fibers with a surface free energy controlled within this range not only firmly adhere to the thermoplastic resin to improve mechanical characteristics but also exhibit high affinity with the thermosetting resin when a part of the reinforcing fibers contained in the thermoplastic resin layer comes into contact with the thermosetting resin layer. The surface free energy of the reinforcing fibers is more preferably 10 to 40 mJ/m$^2$, and still more preferably 20 to 40 mJ/m$^2$. If it is less than 10 mJ/m$^2$, the affinity between the reinforcing fibers and the thermosetting resin or the thermoplastic resin is low, and the strength of the thermoplastic resin layer or the adhesion strength between the thermoplastic resin layer and the thermosetting resin layer is insufficient. If it is more than 50 mJ/m$^2$, the reinforcing fibers are aggregated with each other to cause poor dispersion in the molded article, leading to an increase in variation in joining strength.

For the reinforcing fibers contained in the thermosetting resin layer as well, those having a surface free energy of 10 to 50 mJ/m$^2$ as measured by a Wilhelmy plate method are preferably used. The reinforcing fibers with a surface free energy controlled within this range not only firmly adhere to the thermosetting resin to improve mechanical characteristics but also exhibit high affinity with the thermoplastic resin when a part of the reinforcing fibers contained in the thermosetting resin layer is in contact with the thermoplastic resin layer.

Examples of a method for controlling the surface free energy of the reinforcing fibers include a method for controlling the surface free energy by subjecting the fiber surface to an oxidation treatment and adjusting the amount of an oxygen-containing functional group such as a carboxyl group or a hydroxyl group and a method for controlling the surface free energy by attaching a simple substance or a plurality of compounds to the fiber surface. When a plurality of compounds are attached to the fiber surface, a compound having a high surface free energy and a compound having a low surface free energy may be mixed and attached.

Examples of the compound include polyhydric alcohol fatty acid ester, polyoxyalkylene, bisphenol A-alkylene oxide adduct, sorbitol type polyglycidyl ether, glycerol type polyglycidyl ether, polyethylene glycol diglycidyl ether, glycidyl benzamide, amide-modified epoxy, urea-modified epoxy, glycidyl phthalimide, urethane-modified epoxy, and amine-based compounds such as polyethyleneimine and polyallylamine, and these compounds are used alone or in combination.

Hereinafter, a method for calculating the surface free energy of the reinforcing fibers will be described.

The surface free energy can be calculated by measuring contact angles of the reinforcing fibers to three kinds of solvents (purified water, ethylene glycol, and tricresyl phosphate), and then calculating the surface free energy by using an Owens' approximation formula. The procedures will be described below, but measuring instruments and detailed methods are not necessarily limited to the following.

First, one single fiber is taken out from a reinforcing fiber bundle using DCAT11 manufactured by DataPhysics Corporation, it is cut into eight pieces having a length of $12 \pm 2$ mm, and then they are pasted to a special holder FH12 (a flat plate whose surface is coated with a sticky substance) in parallel with gaps between the single fibers of 2 to 3 mm. Thereafter, the tips of the single fibers are cut to the same size and are set in the DCAT11 of the holder. In the measurement, a cell containing each solvent is brought close to the lower ends of the eight single fibers at a speed of 0.2 mm/s, and the single fibers are immersed up to 5 mm from the tips thereof. Thereafter, the single fibers are pulled up at a speed of 0.2 mm/s. This operation is repeated four or more times. The force F received by the single fiber while the single fiber is immersed in the liquid is measured with an electronic balance. Using this value, a contact angle θ is calculated by the following equation.

$COS\theta$ = (force F (mN) received by eight single fibers) / (8 --> (number of single fibers) × circumference of single fibers (m) × surface tension of solvent (mJ/m$^2$))

The measurement is performed on single fibers extracted from three different points in the reinforcing fiber bundle. That is, with respect to one reinforcing fiber bundle, an average value of the contact angles of 24 in total of single fibers is determined.

The surface free energy $\gamma_f$ of the reinforcing fiber is calculated as the sum of a polar component $\gamma^p_f$ of the surface free energy and a nonpolar component $\gamma^d_f$ of the surface free energy.

The polar component $\gamma^p_f$ of the surface free energy can be obtained by substituting a component of the surface tension and a contact angle of each liquid into an Owens' approximation formula (a formula constituted by a polar component and a nonpolar component of a unique surface tension of each solvent, and a contact angle θ), as shown below, and plotting them on X and Y, and then squaring a gradient a obtained by performing a linear approximation by a method of least squares. The nonpolar component $\gamma^d_f$ of the surface free energy is obtained by squaring an intercept b.

The surface free energy $\gamma_f$ of the reinforcing fibers is the sum of the square of the gradient a and the square of the intercept b.

$$Y = a \cdot X + b$$

$X = \sqrt{}$ (polar component of surface tension of solvent (mJ/m$^2$))/$\sqrt{}$ (nonpolar component of surface tension of solvent (mJ/m$^2$))

$Y = (1 + COS\theta) \cdot$ (polar component of surface tension of solvent (mJ/m$^2$))/$2\sqrt{}$ (nonpolar component of surface tension of solvent (mJ/m$^2$))

Polar component $\gamma^p_f$ of surface free energy of reinforcing fiber = $a^2$
Nonpolar component $\gamma^d_f$ of surface free energy of reinforcing fiber = $b^2$
Total surface free energy $\gamma_f$ = $a^2 + b^2$

The polar component and nonpolar component of the surface tension of each solvent are as follows.

- Purified water
  Surface tension: 72.8 mJ/m$^2$, Polar component: 51.0 mJ/m$^2$, Nonpolar component: 21.8 (mJ/m$^2$)
- Ethylene glycol
  Surface tension: 48.0 mJ/m$^2$, Polar component: 19.0 mJ/m$^2$, Nonpolar component: 29.0 (mJ/m$^2$)
- Tricresol phosphate
  Surface tension: 40.9 mJ/m$^2$, Polar component: 1.7 mJ/m$^2$, Nonpolar component: 39.2 (mJ/m$^2$).

The composite prepreg of the present invention, in which the thermoplastic resin layer is present on at least one surface thereof, is easily welded to another member (has secondary weldability). Further, it is preferable that the thermosetting resin layer be present on the other surface. When the thermosetting resin layer is present on the other surface, the composite prepreg of the present invention exhibits tackiness derived from the thermosetting resin, which is preferable.

Examples of the reinforcing fibers contained in the thermoplastic resin layer and the thermosetting resin layer include glass fibers, carbon fibers, metal fibers, aromatic polyamide fibers, polyaramid fibers, alumina fibers, silicon carbide fibers, boron fibers, and basalt fibers. These may be used alone or in combination of two or more thereof as appropriate. These reinforcing fibers may be subjected to a surface treatment. Examples of the surface treatment include a metal deposition treatment, a treatment with a coupling agent, a treatment with a sizing agent, and an additive attachment treatment. Among these reinforcing fibers, reinforcing fibers having conductivity are also included. As the reinforcing fibers, carbon fibers are preferably used from the viewpoint that carbon fibers have a small specific gravity, high strength, high elastic modulus, and small linear expansion coefficient, and therefore a difference in fiber expansion coefficient between the thermoplastic resin and the thermosetting resin can be reduced, and warpage of the prepreg can be reduced. Commercially available products of the carbon fiber may include "TORAYCA (registered trademark)" T800G-24K, TORAYCA (registered trademark)" T800S-24K, "TORAYCA (registered trademark)" T700G-24K, "TORAYCA (registered trademark)" T700S-24K, "TORAYCA (registered trademark)" T300-3K, and "TORAYCA (registered trademark)" T1100G-24K (all manufactured by Toray Industries, Inc.).

The reinforcing fibers mainly contained in the thermoplastic resin layer and the thermosetting resin layer, respectively, may have different characteristics. Such a prepreg can be produced by using different reinforcing fibers for the thermoplastic prepreg and the thermosetting prepreg before joining them in the production method described later. Such a prepreg can impart different characteristics to the thermoplastic resin layer and the thermosetting resin layer.

However, from the viewpoint that the difference in linear expansion coefficient between the thermoplastic resin layer and the thermosetting resin layer can be reduced and the warpage can be reduced, it is more preferable to use reinforcing fibers that are common (have the same characteristics) between the thermoplastic resin layer and the thermosetting resin layer.

When the reinforcing fibers contained in the thermoplastic resin layer or the thermosetting resin layer have a strand tensile strength of 5.5 GPa or more as measured in accordance with the resin-impregnated strand test method of JIS R7608 (2007), a molded body having excellent joining strength in addition to tensile strength is obtained, which is preferable. The strand tensile strength is more preferably 5.8 GPa. The joining strength as used herein refers to a tensile shear joining strength determined in accordance with ISO 4587:1995 (JIS K6850 (1994)).

In the composite prepreg of the present invention, the amount of reinforcing fibers per unit area in the plane direction is preferably 30 to 2,000 g/m$^2$. When the amount of the reinforcing fibers is 30 g/m$^2$ or more, the number of layers can be reduced for obtaining a predetermined thickness in producing the molded body, and the operation tends to be simple. On the other hand, when the amount of the reinforcing fibers is 2,000 g/m$^2$ or less, the drapability of the prepreg tends to be improved.

The mass content of the reinforcing fibers in the composite prepreg of the present invention is preferably 30 to 90 mass%, more preferably 35 to 85 mass%, still more preferably 40 to 80 mass%. When the mass content of the reinforcing fibers is 30 mass% or more, the amount of the resin is not excessively large relative to the amount of the fibers, it is easy to obtain the advantage of the molded body having the excellent specific strength and specific elastic modulus, and a calorific value is hardly excessively increased at the time of curing in forming the molded body. When the mass content of the reinforcing fibers is 90 mass% or less, poor impregnation of the resin in producing the prepreg is unlikely to occur, and voids in the resulting molded body tend to decrease. As a method for measuring the mass content of reinforcing fibers, the obtained composite prepreg is cut into 200 mm square, and the mass is measured. Thereafter, the thermosetting resin and the thermoplastic resin are burned off by heating at 450°C for 30 minutes under a nitrogen atmosphere, and the mass of the remaining reinforcing fibers is measured to determine the ratio [%] of the mass after burning off to the mass before burning off.

In the composite prepreg of the present invention, the volume content of the reinforcing fibers in the thermoplastic resin layer is preferably 10% or more. It is preferably 10 to 99%, more preferably 20 to 95%, and particularly preferably 40% to 70%. With the volume content within this range, not only the mechanical characteristics of the prepreg can be improved, but also the flow of the thermoplastic resin can be suppressed when the thermoplastic resin layer is joined to the

7

thermosetting resin layer in producing the composite prepreg. Further, when the composite prepreg of the present invention is joined to another member, the presence of reinforcing fibers in the above range makes it possible to join the composite prepreg while suppressing the flow of the thermoplastic resin.

Examples of a method for measuring the volume content of the reinforcing fibers in the thermoplastic resin layer include a method of performing segmentation analysis using an X-ray CT image of a small piece of the composite prepreg of the present invention in which the thermosetting resin is cured, and dividing the volume of the reinforcing fibers present in the thermoplastic resin layer region by the total volume of the thermoplastic resin layer to determine the ratio [%]. The composite prepreg used for the measurement may be dyed in order to adjust the contrast between the thermoplastic resin layer and the thermosetting resin layer in the observation.

In the composite prepreg of the present invention, when a cross section perpendicular to the plane direction of the prepreg is observed, it is preferable that reinforcing fibers be distributed in a region of 80% or more of the thickness of each layer of the thermoplastic resin layer and the thermosetting resin layer. With the distribution within this range, fibers are substantially uniformly dispersed in the prepreg, and therefore not only the tensile strength of the prepreg can be improved, but also warpage of the prepreg can be reduced by substantially uniformly dispersing the fibers throughout the prepreg. From the viewpoint of further improving the tensile strength of the prepreg, in each of the thermoplastic resin layer and the thermosetting resin layer, it is more preferable that the reinforcing fibers be distributed in a region of 90% or more of the thickness of each layer.

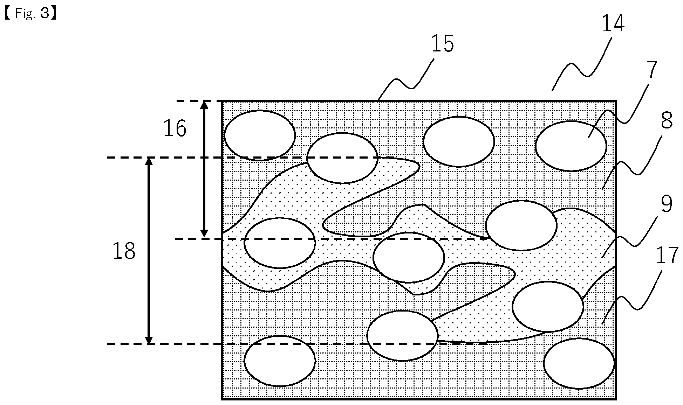

Here, the distribution region of the reinforcing fibers in each layer can be determined by the following method as an example. First. after the thermosetting resin is cured, in a cross-sectional image obtained using X-ray CT, the presence or absence of reinforcing fibers in regions sectioned by 20 $\mu$m in the thickness direction of the prepreg entirely is determined. The thickness of the thermoplastic resin layer or the thermosetting resin layer is the maximum value of the thickness where the thermoplastic resin contained in the thermoplastic resin layer to be focused or the thermosetting resin contained in the thermosetting resin layer to be focused is present in the cross-sectional image. Here, the thicknesses of the thermoplastic resin layer and the thermosetting resin layer will be described with reference to Fig. 3, which is a schematic view of an observation cross section of the composite prepreg according to the present invention. In a cross-sectional image 14 perpendicular to the plane direction of the prepreg, the reinforcing fibers 7, the thermoplastic resin layer 8, the thermosetting resin layer 9, and another thermoplastic resin layer 17 are shown. In the cross-sectional image 14, regarding a thickness 16 of the thermoplastic resin layer, the maximum value of the thickness of the portion where the thermoplastic resin contained in the thermoplastic resin layer 8 is entered most into the adjacent thermosetting resin layer 9 from a prepreg surface 15 is defined as the thickness 16 of the thermoplastic resin layer. Similarly, in the cross-sectional image 14, the thermosetting resin layer 9 is adjacent to the thermoplastic resin layer 8 and another thermoplastic resin layer 17, and the maximum value of the thickness of the portion where the thermosetting resin contained in the thermosetting resin layer 9 is entered most into each of the thermoplastic resin layer 8 and another thermoplastic resin layer 17 is defined as the thickness 18 of the thermosetting resin layer. In each of the thermoplastic resin layer and the thermosetting resin layer, the fiber dispersibility in the thickness range is determined.

In the composite prepreg of the present invention, a coefficient of variation Q for the volume content of reinforcing fibers per 0.05 mm square unit section in the thermoplastic resin layer is preferably 40% or less. When the coefficient of variation Q is 40% or less, the fibers are uniformly dispersed in the thermoplastic resin layer, the resin-rich portion is suppressed, and not only the flow of the thermoplastic resin can be suppressed in the step of joining the prepreg to another thermoplastic resin member welded via the thermoplastic resin layer, or in the step of combining the thermoplastic prepreg and the thermosetting prepreg in producing the prepreg, but also the warpage of the obtained prepreg is reduced and the mechanical characteristics as the prepreg are also improved because the fibers are uniformly disposed. Further, in joining the prepreg to another thermoplastic resin member welded via the thermoplastic resin layer, variations in joining strength and fracture mode are suppressed. The coefficient of variation Q is more preferably 30% or less, still more preferably 10% or less. The lower limit value of the coefficient of variation Q is not particularly limited but is preferably as close to zero as possible from the viewpoint of producing the prepreg and joining the prepreg with another member because the closer to zero it is, the more uniformly dispersed the fibers are.

Examples of a method for measuring the coefficient of variation Q include a method of performing segmentation analysis with an X-ray CT image of a small piece of the composite prepreg of the present invention in which the thermosetting resin is cured, measuring a ratio [%] obtained by dividing a volume of reinforcing fibers present per 0.05 mm unit section in the thermoplastic resin layer by a 0.05 mm unit section volume at 100 points, calculating a standard deviation and an average value thereof, and dividing the standard deviation by the average value to obtain a value, and a method of cutting the prepreg along a thickness direction, measuring a fiber content of reinforcing fibers per 0.05 mm unit section in the thermoplastic resin layer at 10 points on a cut surface thereof, calculating the standard deviation and the average value, and dividing the standard deviation by the average value to obtain a value.

A coefficient of variation R in the volume content of reinforcing fibers per unit section of 0.05 mm square in the thermosetting resin layer can also be calculated in the same manner as in the method for obtaining the coefficient of variation Q of reinforcing fibers in the thermoplastic resin layer described above. The coefficient of variation R is also preferably 40% or less, more preferably 30% or less, and still more preferably 10% or less, as with the coefficient of variation Q, from the viewpoints of suppressing the flow of the thermosetting resin at the time of combining the thermoplastic prepreg and the thermosetting prepreg, suppressing the flow of the thermosetting resin at the time of joining the composite prepreg to another resin member, joining strength, and stabilizing the fracture form.

In the composite prepreg of the present invention, the adhesion strength between the thermoplastic resin layer and the thermosetting resin layer is 1 N/24 mm or more. Such a range is preferable because the thermosetting resin layer is hardly peeled off from the thermoplastic resin layer in handling the prepreg. From the same viewpoint, the adhesion strength between the thermoplastic resin layer and the thermosetting resin layer is more preferably 10 N/24 mm or more, and the upper limit thereof is not particularly limited, but 100 N/24 mm is practically sufficient.

Such adhesion strength can be determined as follows. According to JIS Z0237 (2009), the prepreg is cut into a piece having a width of 24 mm and a length of 300 mm, and the thermosetting resin layer is adhered to a flat plate made of an SUS material to form a test piece. For this test piece, the thermoplastic resin layer is peeled off in the direction of 180 degrees at a speed of 300 mm/min, and the simple average value of the loads at that time is taken as the adhesion strength.

In the composite prepreg of the present invention, the interface between the thermosetting resin layer and the thermoplastic resin layer preferably has the following shape. That is, as shown in Fig. 1, when a cross section of the prepreg that forms an angle of 45 degrees with respect to the orientation direction of continuous reinforcing fibers (when the reinforcing fibers are in the form of a woven fabric, an angle of 45 degrees with respect to any fibers constituting the woven fabric) and is perpendicular to the plane direction of the prepreg, it is preferable that in the cross section, a roughness average length RSm of the curve formed by the interface between both the resin layers (hereinafter, referred to as "interface curve") be 100 $\mu$m or less, and a roughness average height Rc be 3.5 $\mu$m or more. Here, the roughness average length RSm and the roughness average height Rc are parameters representing the roughness of the outline curve measured according to JIS B0601 (2013).

In such cross-section observation, when the roughness average length RSm of the interface curve is 100 $\mu$m or less, not only a chemical or/and physical bonding force but also a mechanical bonding force such as entanglement is applied, and the thermoplastic resin layer and the thermosetting resin layer are less likely to be peeled from each other. The lower limit value thereof is not particularly limited but is preferably 15 $\mu$m or more from the viewpoint of avoiding decrease in the mechanical bonding force due to stress concentration.

When the roughness average height Rc of the interface curve is 3.5 $\mu$m or more, not only mechanical bonding force due to entanglement but also reinforcing fibers present at the interface are chemically and/or physically bonded to the thermoplastic resin and the thermosetting resin, and therefore adhesion between the thermoplastic resin layer and the thermosetting resin layer improves, which is preferable. The range of the roughness average height Rc of the interface curve is more preferably 10 $\mu$m or more with which the reinforcing fibers contained in one resin layer tend to be contained in the other resin layer as well to further improve adhesion, and particularly preferably 20 $\mu$m or more. The upper limit value is not particularly limited but is preferably 100 $\mu$m or less from the viewpoint of avoiding decrease in the mechanical bonding force due to stress concentration.

As an example of a production method for achieving the Rc and RSm, as described later, there is a production method including preparing a thermoplastic semipreg in which continuous reinforcing fibers are impregnated with a thermoplastic resin while leaving an unimpregnated region on a surface, stacking a thermosetting prepreg in which reinforcing fibers are impregnated with a thermosetting resin on the thermoplastic semipreg so as to be in contact with the unimpregnated region of the thermoplastic semipreg, and heating and pressurizing the semipreg and prepreg.

Here, known methods can be used for measuring the roughness average height Rc and the roughness average length RSm of the interface curve. Examples thereof include a method of, after curing the thermosetting resin, measuring them from a cross-sectional image acquired using X-ray CT, a method of measuring them from an elemental analysis mapping image by an energy dispersive X-ray spectrometer (EDS), and a method of measuring them from a cross-sectional image by an optical microscope, a scanning electron microscope (SEM), or a transmission electron microscope (TEM).

In the observation, the thermoplastic and/or thermosetting resin may be dyed to adjust the contrast. In the image obtained by any of the above methods, the roughness average height Rc and the roughness average length RSm of the interface curve are measured in a region of 500 $\mu$m square.

A method for measuring the roughness average height Rc and the roughness average length RSm of the interface curve (method 1 for measuring interface curve element) is shown with reference to Fig. 2. Vertical base lines 12 are drawn at intervals of 5 $\mu$m from the thermosetting resin layer 9 toward the thermoplastic resin layer 8 with an end 11 on the thermosetting resin layer side of a rectangular cross-sectional image 6 as a reference line. Points at which the vertical base lines drawn from the reference line intersect the thermoplastic resin for the first time are plotted, and a line connecting the plotted points is defined as an interface curve 13. The obtained interface curve 13 is subjected to a filtering processing in accordance with JIS B0601 (2013), and the roughness average height Rc and the roughness average length RSm of the interface curve 13 are calculated.

In the present invention, examples of the thermoplastic resin include polyester-based resins such as polyethylene terephthalate, polybutylene terephthalate, polytrimethylene terephthalate, polyethylene naphthalate, and liquid crystal polyester, polyolefins such as polyethylene, polypropylene, and polybutylene, styrene-based resins, urethane resins, polyoxymethylene, polyamides such as polyamide 6 and polyamide 66, polycarbonate, polymethylmethacrylate, polyvinyl chloride, polyarylenesulfides such as polyphenylenesulfide, polyphenyleneether, modified polyphenyleneether, polyimide, polyamideimide, polyetherimide, polysulfone, modified polysulfone, polyethersulfone, polyketone, polyaryleneetherketones such as polyetherketone, polyetheretherketone, and polyetherketoneketone, polyarylate, polyethernitrile, phenol-based resins, and phenoxy resins. These thermoplastic resins may be a copolymer or a modified product of the above-mentioned resins, and/or a resin obtained by blending two or more kinds thereof. In the present specification, "thermoplastic resin" is used as a term including a composition containing a filler and an additive.

Among them, at least one thermoplastic resin selected from the group consisting of polyolefin, polycarbonate, polyester, polyarylenesulfide, polyamide, polyoxymethylene, polyetherimide, polyethersulfone, and polyaryleneetherketone is preferable from the viewpoint of the balance between molding processability, heat resistance, and mechanical characteristics.

Further, other fillers and additives may be appropriately included depending on the use or the like as long as the object of the present invention is not impaired. Examples thereof include inorganic fillers, flame retardants, conductivity imparting agents, crystal nucleating agents, ultraviolet absorbers, antioxidants, damping agents, antibacterial agents, insect repellents, deodorants, coloring inhibitors, heat stabilizers, mold release agents, antistatic agents, plasticizers, lubricants, coloring agents, pigments, dyes, foaming agents, antifoaming agents, and coupling agents.

In the present invention, examples of the thermosetting resin include an unsaturated polyester resin, a vinyl ester resin, an epoxy resin, a phenol resin, a urea resin, a melamine resin, a polyimide resin, a cyanate ester resin, a bismaleimide resin, a benzoxazine resin, a copolymer or modified product thereof, and a resin obtained by blending at least two kinds thereof. To improve impact resistance, an elastomer or a rubber component may be added to the thermosetting resin. Among them, an epoxy resin is preferable because it is excellent in mechanical characteristics, heat resistance, and adhesiveness to the reinforcing fibers. Examples of the main agent of the epoxy resin include bisphenol type epoxy resins such as bisphenol A type epoxy resin, bisphenol F type epoxy resin, bisphenol AD type epoxy resin, and bisphenol S type epoxy resin, brominated epoxy resins such as tetrabromobisphenol A diglycidyl ether, epoxy resins having a biphenyl skeleton, epoxy resins having a naphthalene skeleton, epoxy resins having a dicyclopentadiene skeleton, novolac type epoxy resins such as phenol novolac type epoxy resins and cresol novolac type epoxy resins, glycidyl amine-type epoxy resins such as N,N,O-triglycidyl-m-aminophenol, N,N,O-triglycidyl-p-aminophenol, N,N,O-triglycidyl-4-amino-3-methylphenol, N,N,N' ,N'-tetraglycidyl-4,4'-methylenedianiline, N,N,N',N'-tetraglycidyl-2,2'-diethyl-4,4'-methylenedianilin e, N,N,N',N'-tetraglycidyl-m-xylylenediamine, N,N-diglycidylaniline, and N,N-diglycidyl-o-toluidine, resorcidyl glycidyl ether, and triglycidyl isocyanurate.

Examples of the curing agent of the epoxy resin include dicyandiamide, an aromatic amine compound, a phenolnovolac resin, a cresolnovolac resin, a polyphenol compound, an imidazole derivative, tetramethylguanidine, a thiourea-added amine, a carboxylic acid hydrazide, a carboxylic acid amide, and a polymercaptan.

In the present specification, "thermosetting resin" is also a term including a composition containing a curing agent and an additive.

[Method for Producing Composite Prepreg]

As an example, the composite prepreg of the present invention can be produced by a production method including preparing a thermoplastic semipreg in which continuous reinforcing fibers are impregnated with a thermoplastic resin while leaving an unimpregnated region on a surface of the thermoplastic semipreg, stacking, on the thermoplastic semipreg, a thermosetting prepreg in which reinforcing fibers are impregnated with a thermosetting resin such that the thermosetting prepreg is in contact with the unimpregnated region of the thermoplastic semipreg, and heating and pressurizing the semipreg and prepreg. By use of such a semipreg, the unimpregnated region of the semipreg is impregnated with the thermosetting resin contained in the thermosetting prepreg at the time of combining them, and the thermoplastic resin layer and the thermosetting resin layer can be firmly joined.

The impregnation rate of the thermoplastic resin in the thermoplastic semipreg is preferably 97% or less, more preferably 90% or less. The lower the impregnation rate, the larger the number of voids contained in the semipreg, and in the subsequent combining step, the voids are impregnated with the thermosetting resin, and therefore high adhesion strength is exhibited. The lower limit value of the impregnation rate is not particularly limited but is preferably 50% or more from the viewpoint of reducing voids remaining in the composite prepreg after combining and is preferably 60% or more from the viewpoint of further simplifying the combining step. Here, the impregnation rate is a value obtained by the following Formula (1) when the total cross-sectional area of the fiber-reinforced plastic substrate including voids in the thermoplastic prepreg is A0 and the cross-sectional area of voids is A1 in cross-section observation of the thermoplastic semipreg in the thickness direction.

$$\text{Impregnation rate} = (A0 - A1)/A0 \times 100 \ ... \ (1)$$

Another method for producing the composite prepreg of the present invention is a method including preparing a thermoplastic prepreg in which continuous reinforcing fibers are impregnated with a thermoplastic resin having a melting temperature of 180°C or less, stacking, on the thermoplastic prepreg, a thermosetting prepreg in which reinforcing fibers are impregnated with a thermosetting resin, and heating and pressurizing them in a curing reaction temperature range of the thermosetting resin and at a melting temperature of the thermoplastic resin or more. The melting temperature of the thermoplastic resin refers to a melting point in the case of a crystalline thermoplastic resin and a glass transition temperature in the case of an amorphous thermoplastic resin, and can be measured as follows. A peak value of the melting temperature of the thermoplastic resin is measured in accordance with "Method for Measuring Plastic Transition Temperature" specified in JIS K7121 (1987). As an adjustment of the sample before measurement, the sample is dried for 24 hours or more in a vacuum dryer controlled at a furnace temperature of 50°C, a melting temperature according to the above standard is obtained by a differential scanning calorimeter, and a peak top is defined as the melting temperature. By use of such a thermoplastic resin, when the thermoplastic prepreg and the thermosetting prepreg are heated and pressurized at a temperature equal to or higher than the melting temperature of the thermoplastic resin in the step of combining the thermoplastic prepreg and the thermosetting prepreg, the shape of the thermoplastic prepreg hardly collapses because the thermoplastic prepreg contains reinforcing fibers, but the thermoplastic resin and the thermosetting resin flow and mix near the boundary with the thermosetting prepreg, and therefore high adhesion strength is exhibited.

<Fiber-Reinforced Plastic Molded Body>

Another aspect of the present invention is a fiber-reinforced plastic molded body in which reinforcing fibers are impregnated with a thermoplastic resin and a thermosetting resin, and a thermoplastic resin layer and a thermosetting resin layer that form an interface and are joined to each other are formed, wherein the thermoplastic resin layer is present on at least one surface of the fiber-reinforced plastic molded body, and the thermoplastic resin layer contains continuous reinforcing fibers, and reinforcing fibers are distributed in a region of 80% or more of a thickness of each of the thermoplastic resin layer and the thermosetting resin layer in a cross section perpendicular to a plane direction, and an adhesion strength between the thermoplastic resin layer and the thermosetting resin layer is 1 N/24 mm or more. The internal form of such a fiber-reinforced plastic molded body is the same as that of the composite prepreg described above except that the thermosetting resin is cured, and thus the description thereof is omitted. The method for determining the adhesion strength is also the same as in the case of the composite prepreg described above.

Such a fiber-reinforced plastic molded body can be produced by heating and pressurizing the composite prepreg described above. As a method of heating and pressurizing the composite prepreg, for example, a press molding method, an autoclave molding method, a bagging molding method, a wrapping tape method, an internal pressure molding method, or the like is adopted.

More specific examples of the method for molding the fiber-reinforced plastic molded body of the present invention include a method of stacking the above-described composite prepreg of the present invention alone or together with another prepreg and molding it by a press molding method, an autoclave molding method, a bagging molding method, a wrapping tape method, an internal pressure molding method or the like, and a method of using the composite prepreg of the present invention and another fiber-reinforced plastic substrate or fiber substrate and molding it by a hand lay-up method, a filament winding method, a pultrusion method, a resin injection molding method, a resin transfer molding method or the like.

EXAMPLES

Hereinafter, the present invention will be described in more detail with reference to Examples. However, the scope of the present invention is not limited to these Examples. The unit "part" of the composition ratio refers to part by mass unless otherwise noted. Measurements of various characteristics were performed under an environment in which a temperature was 23°C and a relative humidity was 50% unless otherwise noted.

(1) Adhesion Strength

The composite prepreg produced in each Example and Comparative Example was cut into a width of 24 mm and a length of 300 mm to prepare a test piece. This test piece was fixed to a flat plate made of a stainless-steel material, and the thermoplastic resin layer was peeled off in a direction of 180 degrees at a speed of 300 mm/min according to JIS Z0237 (2009), and a simple average value of loads at that time was taken as adhesion strength.

(2) Fiber Dispersibility

The composite prepreg produced in each Example and Comparative Example was sandwiched between surfaces of two smooth polytetrafluoroethylene resin plates, and the thermosetting resin contained in the prepreg was gradually cured at 40°C for 10 days. After curing, a small piece of 20 mm square was cut out from the prepreg, embedded in an epoxy resin, and polished so that the cross section perpendicular to the orientation direction of the reinforcing fibers became an observation surface, whereby a sample was produced. The sample was magnified 400 times with a laser microscope (VK-9510 manufactured by KEYENCE CORPORATION), and the fiber dispersibility in the thickness direction was observed. For the determination of the dispersibility, the presence or absence of fibers in a region with a width of 20 mm divided for every 20 $\mu$m in the thickness direction of the prepreg in the sample cross section was determined; for each of the thermoplastic resin layer and the thermosetting resin layer, the case where the region where the fibers are present exceeded 80% in both the two layers was determined as "good", and the case where the region of either or both of the layers did not exceed 80% was determined as "poor".

(3) Coefficient of Variation Q

The composite prepreg produced in each Example and Comparative Example was sandwiched between surfaces of two smooth polytetrafluoroethylene resin plates, and the thermosetting resin contained in the prepreg was gradually cured at 40°C for 10 days. After curing, a sample having a width of 15 mm and a length of 100 mm was cut from the prepreg and photographed at a FOV of 500 $\mu$m with an X-ray CT apparatus, and segmentation analysis was performed. As a measuring apparatus, an X-ray microscope "nano 3DX (registered trademark)" (manufactured by Rigaku Corporation) was used. From the analysis result, the ratio [%] obtained by dividing the volume of reinforcing fibers present per 0.05 mm unit section in the thermoplastic resin layer by the 0.05 mm unit section volume was measured at 100 points, the standard deviation and the average value thereof were calculated, and the value obtained by dividing the standard deviation by the average value was taken as the coefficient of variation Q.

(4) Tensile Strength of Molded Body

Measurement was performed based on the ISO 527-3 method (1995). The composite prepreg produced in each Example and Comparative Example was cut into two pieces each having a 300 mm square. The two cut prepregs were stacked such that the fiber orientation directions coincided with each other and the thermosetting resin layers were in contact with each other, and autoclave molding was performed under conditions of 130°C, 2 hours, and 0.6 MPa to obtain a molded body in which the thermosetting resin was cured. A test piece was produced by cutting out the obtained molded body in parallel with any fiber orientation direction, the measurement was performed with the number of measurements of n = 5, and the average value was taken as the tensile strength. As a measuring apparatus, "Instron (registered trademark)" 5565 universal material testing machine (manufactured by Instron Japan Co., Ltd.) was used.

(5) Handleability

The handleability was comprehensively judged from the warpage of the obtained prepreg, the tackiness of the surface of the prepreg, and the ease of unwinding of a wound body of the prepreg. For the warpage amount, a case where the amount of warpage described later is 10 mm or less was regarded as good. For the tackiness of the surface of the prepreg, a cover glass of 18 mm $\times$ 18 mm was pressure-bonded to the surface of the thermosetting resin layer of the composite prepreg with a force of 3.9 N for 5 seconds using a tack tester (PICMA Tack Tester II: manufactured by TOYO SEIKI CO., LTD.), then the cover glass was pulled at a speed of 30 mm/min, and the resistance force at the time of peeling off was measured with n = 5 as a tack value, and a case where the average value was 3.0 N or more was regarded as good. For the ease of unwinding of a wound body of the prepreg, those in which unwinding caused by cracking, warpage, or the like of the prepreg did not occur when 100 m of the prepreg was produced while being wound around a paper tube having a diameter of 300 mm were regarded as good. A relative evaluation was performed on a three scale in which A indicates a case in which all of them were good, B indicates a case in which two or more points were good, and C indicates a case in which two or more points were poor.

(6) Warpage Amount

The composite prepreg produced in each Example and Comparative Example was cut into five pieces each having a 300 mm square. Each piece of the cut composite prepreg was press-molded under conditions of 130°C, 2 hours, and 0.6 MPa to obtain a molded body in which the thermosetting resin was cured. The molded body was left standing on a horizontal board in a state where three of the four corners of the molded body were grounded to the horizontal board, and the height of the fourth point (distance from the horizontal board) was measured and the arithmetic average value of N = 5 was taken as the warpage amount.

(7) Roughness Average Length RSm and Roughness Average Height Rc of Interface Curve

The composite prepreg produced in each Example and Comparative Example was press-molded under the conditions of 130°C, 2 hours, and 0.6 MPa, to obtain a molded body in which the thermosetting resin was cured. An image at a magnification of 1000 times was photographed using an optical microscope in an observation cross section obtained by cutting the obtained molded body perpendicularly to the planar direction. In an observation region of any 500 μm square in the obtained image, the roughness average length RSm and the roughness average height Rc of a cross-section curve element obtained by the method 1 for measuring the cross-section curve element and defined by JIS B0601 (2001) were measured.

<Examples>

The following materials were used in Examples and Comparative Examples below.

[Glass Fiber]

A continuous E-glass fiber with a total single yarn number of 1,600 subjected to a bundling treatment was used.
The characteristics are as follows.

Single fiber diameter: 13 μm
Tensile strength: 3400 MPa
Tensile modulus: 72 GPa
Tensile elongation: 3%
Density: 2.6 g/cm$^3$

[Glass Fiber Woven Fabric]

A plain-woven glass fiber fabric of 260 g/m$^2$ made with the E-glass fibers.

[Carbon Fiber 1]

A copolymer with polyacrylonitrile as a main component was subjected to spinning, a firing treatment, and a surface oxidation treatment to obtain a continuous carbon fiber with a total single yarn number of 12,000. The characteristics of the continuous carbon fiber were as follows.

Single fiber diameter: 7 μm
Density: 1.8 g/cm$^3$
Strand tensile strength: 4600 MPa
Strand tensile modulus: 220 GPa

[Carbon Fibers 2 to 7]

Carbon fibers 2 to 7 were obtained by obtaining a common carbon fiber bundle as a raw material by the following method, and then applying various sizing agent compounds. That is, first, an acrylonitrile copolymer copolymerized with itaconic acid was spun and fired to obtain a carbon fiber bundle having a total single yarn number of 24,000, a specific gravity of 1.8 g/cm$^3$, a strand tensile strength of 5.9 GPa, and a strand tensile elastic modulus of 294 GPa. Thereafter, various sizing agent compounds were mixed with acetone to obtain solutions of about 1 mass% in which the compounds were uniformly dissolved, respectively. Each compound was applied to the carbon fiber bundle by an immersion method, and then subjected to a heating treatment at 210°C for 90 seconds to adjust the adhesion amount of each compound to 0.5 parts by mass with respect to 100 parts by mass of the carbon fiber to which each compound was adhered. The compound for a sizing agent used for each carbon fiber and the surface free energy after application of the sizing agent are as follows.

- Carbon fiber 2: polyethylene glycol diglycidyl ether ("DENACOL" (registered trademark) EX-841, manufactured by Nagase ChemteX Corporation), surface free energy 20 mJ/m$^2$
- Carbon fiber 3: bisphenol A diglycidyl ether ("jER" (registered trademark) 828, manufactured by Mitsubishi Chemical Corporation), surface free energy 9 mJ/m$^2$
- Carbon fiber 4: sorbitol polyglycidyl ether ("DENACOL" (registered trademark) EX-614B, manufactured by Nagase ChemteX Corporation), surface free energy 32 mJ/m$^2$
- Carbon fiber 5: bisphenol A propylene oxide 24 mol adduct, surface free energy 18 mJ/m$^2$
- Carbon fiber 6: polyallylamine (PAA-01, manufactured by NIPPON SHOKUBAI CO., LTD.), surface free energy 32 mJ/m$^2$
- Carbon fiber 7: polyethyleneimine (SP-012, manufactured by NIPPON SHOKUBAI CO., LTD.), surface free energy 33 mJ/m$^2$

[Carbon Fiber Woven Fabric]

A carbon fiber woven fabric "TORAYCA" (registered trademark) C06343 (manufactured by Toray Industries, Inc.) was used. The characteristics of this woven fabric were as follows.

Single fiber diameter: 7.0 μm
Weave: plain weave
Basis weight: 180 g/m$^2$

[Carbon Fiber Mat]

Carbon Fiber 1 was cut into 5 mm with a cartridge cutter to obtain chopped carbon fibers. A dispersion liquid made of water and a surfactant (polyoxyethylene lauryl ether (product name) manufactured by NACALAI TESQUE, INC.) at a concentration of 0.1 mass% was produced, and a carbon fiber mat was produced from the dispersion liquid and the chopped carbon fibers using a carbon fiber mat production apparatus. The production apparatus included a cylindrical container having a diameter of 1000 mm with an opening cock at a lower part of the container as a dispersion tank, and a linear transportation unit (inclination angle: 30°) that connects the dispersion tank and a papermaking tank. A stirrer was attached to an opening on an upper surface of the dispersion tank, and the chopped carbon fibers and the dispersion liquid (dispersion medium) was able to be introduced from the opening. The papermaking tank was a tank including a mesh conveyor having a papermaking surface having a width of 500 mm at the bottom, and a conveyor capable of conveying a carbon fiber substrate (papermaking substrate) was connected to the mesh conveyor. Paper making was performed with a carbon fiber concentration in the dispersion of 0.05 mass%. The carbon fiber substrate obtained by papermaking was dried in a drying furnace at 200°C for 30 minutes and trimmed to a desired width to obtain a carbon fiber mat. The basis weight of the obtained mat was 180 g/m$^2$.

[Thermoplastic Resin (PP-1)]

A resin made of 100 mass% of an unmodified polypropylene resin ("Prime Polypro" (registered trademark) J105G manufactured by Prime Polymer Co., Ltd.) was used. The melting point of the resin was about 160°C.

[Thermoplastic Resin (PP-2)]

A resin made of 80 mass% of an unmodified polypropylene resin ("Prime Polypro" (registered trademark) J105G manufactured by Prime Polymer Co., Ltd.) and 20 mass% of an acid-modified polypropylene resin ("ADMER" (registered trademark) QB510 manufactured by Mitsui Chemicals, Inc.) was used. The melting point of the resin was about 160°C.

[Thermoplastic Resin (PA)]

Polyamide resin "AMILAN" (registered trademark) CM1001 (manufactured by Toray Industries, Inc.) was used. The melting point of the resin was about 215°C.

[Thermoplastic Resin (PEKK)]

Polyetherketoneketone resin "KEPSTAN" (registered trademark) 7002 (manufactured by Arkema K.K.) was used. The melting point of the resin was about 330°C.

[Thermosetting Resin (EP)]

50 parts by mass of a bisphenol A type epoxy resin ("jER" (registered trademark) 825, manufactured by Mitsubishi Chemical Corporation) epoxy equivalent: 175 (g/eq.)), 50 parts by mass of a phenol novolac type epoxy resin ("jER" (registered trademark) 154, manufactured by Mitsubishi Chemical Corporation) epoxy equivalent: 178 (g/eq.)), and 3 parts by mass of polyvinyl formal ("VINYLEC" (registered trademark) K manufactured by JNC Corporation) were charged into a kneading apparatus, and heated and kneaded to dissolve the polyvinyl formal. Then, the temperature was lowered to 100°C or less while continuing the kneading, and 5 parts by mass of dicyandiamide (DICY7, manufactured by Mitsubishi Chemical Corporation) and 2 parts by mass of toluene bis(dimethylurea) ("OMICURE" (registered trademark) U-24 M, manufactured by CVC Thermoset Specialties) were added and stirred to obtain EP.

In the following Examples and Comparative Examples, the production method of the prepreg before combining is as follows.

[Production Method I (Method for Producing Prepreg)]

A resin sheet having a width of 300 mm was overlapped on each of both surfaces of a continuous reinforcing fiber sheet made of a reinforcing fiber having a width of 300 mm drawn out from a creel, and a heat rolling was performed to impregnate the continuous reinforcing fiber sheet with a resin sheet made of a thermoplastic resin or a thermosetting resin without a resin unimpregnated region while heating and pressurizing the resin sheet.

[Production Method II (Method for Producing Semipreg)]

Two resin sheets made of a thermoplastic resin and having a width of 300 mm were overlapped on one surface of a continuous reinforcing fiber sheet made of reinforcing fibers having a width of 300 mm and drawn out from a creel, a heat rolling was performed so that a resin unimpregnated region having a volume of 10% with respect to a sum of volumes of the continuous reinforcing fiber sheet and the resin sheets was provided on a surface opposing to the surface on which the resin sheets were overlapped, and the continuous reinforcing fiber sheet was impregnated with the resin sheet while heating and pressurizing the resin sheet. In the combining step described later, the resin unimpregnated region was disposed so as to be in contact with the thermoplastic resin layer.

[Production Method III (Method for Producing Discontinuous Prepreg)]

A resin sheet having a width of 300 mm was overlapped on each of both surfaces of a carbon fiber mat sheet having a width of 300 mm drawn out from a creel, and a heat rolling was performed to impregnate the carbon fiber mat sheet with a resin sheet made of a thermosetting resin without a resin unimpregnated region while heating and pressurizing the resin sheet.

(Example 1-1)

A thermoplastic prepreg produced by the method (I) using a carbon fiber woven fabric as a reinforcing fiber and PP-2 as a thermoplastic resin, and a thermosetting prepreg produced by the method (I) using a glass fiber woven fabric as a reinforcing fiber and EP as a thermosetting resin were produced. Thereafter, the thermoplastic prepreg having a width of 300 mm and the thermosetting prepreg having a width of 300 mm as wound bodies were unwound, subjected to a heat rolling at a temperature of the melting temperature of the thermoplastic resin + 20°C, and combined while being heated and pressurized, whereby a composite prepreg was obtained.

(Example 1-2)

A composite prepreg was obtained in the same manner as in Example 1-1 except that a thermoplastic prepreg produced by the method (I) using the carbon fibers 1 arranged in one direction as reinforcing fibers and PP-2 as a thermoplastic resin and a thermosetting prepreg produced by the method (I) using glass fibers arranged in one direction as reinforcing fibers and EP as a thermosetting resin were used.

(Example 1-3)

A composite prepreg was obtained in the same manner as in Example 1-1 except that a thermoplastic prepreg produced by the method (I) using the carbon fibers 1 arranged in one direction as reinforcing fibers and PP-2 as a thermoplastic resin and a thermosetting prepreg produced by the method (I) using the carbon fibers 1 arranged in one direction as reinforcing fibers and EP as a thermosetting resin were used.

(Example 1-4)

A thermoplastic prepreg (semipreg) produced by the method (II) using carbon fibers 1 arranged in one direction as reinforcing fibers and PEKK as a thermoplastic resin and a thermosetting prepreg produced by the method (I) using carbon fibers 1 arranged in one direction as reinforcing fibers and EP as a thermosetting resin were produced. Thereafter, the thermoplastic prepreg having a width of 300 mm and the thermosetting prepreg having a width of 300 mm as wound bodies were unwound, disposed so that a resin unimpregnated region of the thermoplastic prepreg was in contact with the thermosetting prepreg, subjected to a heat rolling at 130°C, and combined while being heated and pressurized such that the resin unimpregnated part was impregnated with the thermosetting resin, whereby a composite prepreg was obtained.

(Example 1-5)

A composite prepreg was obtained in the same manner as in Example 1-4 except that PA was used as the thermoplastic resin of the thermoplastic prepreg. The roughness average height Rc and the roughness average length RSm of the interface curve in this composite prepreg (that is, the molded body) were 21 $\mu$m and 63 $\mu$m, respectively.

(Example 1-6)

A composite prepreg was obtained in the same manner as in Example 1-4 except that PP-1 was used as the thermoplastic resin of the thermoplastic prepreg. The roughness average height Rc and the roughness average length RSm of the interface curve in this composite prepreg (that is, the molded body) were 38 $\mu$m and 55 $\mu$m, respectively.

(Examples 1-7)

A thermoplastic prepreg produced by the method (I) using carbon fibers 1 arranged in one direction as reinforcing fibers and PP-2 as a thermoplastic resin and a thermosetting prepreg produced by the method (III) using a carbon fiber mat as reinforcing fibers and EP as a thermosetting resin were produced. Thereafter, the thermoplastic prepreg having a width of 300 mm and the thermosetting prepreg having a width of 300 mm as wound bodies were unwound, subjected to a heat rolling at a temperature of the melting temperature of the thermoplastic resin + 20°C, and combined while being heated and pressurized, whereby a composite prepreg was obtained. For the adhesion strength, since the thermosetting resin layer was broken in the test, the value before the breakage was obtained. The roughness average height Rc and the roughness average length RSm of the interface curve in the composite prepreg (that is, the molded body) were 29 $\mu$m and 72 $\mu$m, respectively.

(Comparative Example 1-1)

A thermoplastic prepreg having a width of 300 mm produced by the method (II) using a glass fiber woven fabric as a reinforcing fiber and PP-2 as a thermoplastic resin and a thermosetting resin sheet produced from a thermosetting resin (EP) having a width of 300 mm were unwound, stacked such that the resin unimpregnated region side of the thermoplastic prepreg and the thermosetting resin sheet were in contact with each other, subjected to a heat rolling at 130°C, and combined while being heated and pressurized, whereby a composite prepreg was obtained.

(Comparative Example 1-2)

A composite prepreg was obtained in the same manner as in Example 1-1, while employing a thermoplastic prepreg produced by the method (I) using the carbon fibers 1 arranged in one direction as reinforcing fibers and PA as a thermoplastic resin and a thermosetting prepreg produced by the method (I) using the carbon fibers 1 arranged in one direction as reinforcing fibers and EP as a thermosetting resin were obtained. The adhesion strength and the warpage amount were not able to be measured because the thermoplastic resin layer and the thermosetting resin layer were peeled off at the time of setting the sample. In addition, an attempt was made to measure the roughness average height Rc and the roughness average length RSm of the interface curve in this composite prepreg (that is, the molded body), but voids accompanying the decomposition of the thermosetting resin were generated in the thermoplastic resin layer and the thermosetting resin layer, and Rc and RSm were not able to be measured.

(Comparative Examples 1-3)

A composite prepreg was obtained in the same manner as in Comparative Example 1-2 except that PP-1 was used as the thermoplastic resin of the thermoplastic prepreg. The adhesion strength and the warpage amount were not able to be measured because the thermoplastic resin layer and the thermosetting resin layer were peeled off at the time of setting the sample, and the tensile strength of the molded body was not able to be measured either because the thermoplastic resin layer and the thermosetting resin layer were peeled off also in the tensile test of the molded body. The roughness average height Rc and the roughness average length RSm of the interface curve in the composite prepreg (that is, the molded body) were 0 $\mu$m and 55 $\mu$m, respectively.

(Example 2-1)

A composite prepreg was obtained in the same manner as in Example 1-1, while employing a thermoplastic prepreg produced by the method (I) using the carbon fibers 3 arranged in one direction as reinforcing fibers and PP-2 as a thermoplastic resin and a thermosetting prepreg produced by the method (I) using the carbon fibers 3 arranged in one direction as reinforcing fibers and EP as a thermosetting resin were used.

(Examples 2-2)

A composite prepreg was obtained in the same manner as in Example 2-1 except that the carbon fiber 4 was used as the reinforcing fiber of the thermoplastic prepreg.

(Examples 2-3)

A composite prepreg was obtained in the same manner as in Example 2-1 except that the carbon fiber 2 was used as the reinforcing fiber of the thermoplastic prepreg.

(Examples 2-4)

A composite prepreg was obtained in the same manner as in Example 2-1 except that the carbon fiber 5 was used as the reinforcing fiber of the thermoplastic prepreg.

(Examples 2-5)

A composite prepreg was obtained in the same manner as in Example 2-1 except that the carbon fiber 6 was used as the reinforcing fiber of the thermoplastic prepreg.

(Examples 2-6)

A composite prepreg was obtained in the same manner as in Example 2-1 except that the carbon fiber 7 was used as the reinforcing fiber of the thermoplastic prepreg.

(Examples 2-7)

A composite prepreg was obtained in the same manner as in Example 2-1 except that the carbon fiber 5 was used as the reinforcing fiber of the thermoplastic prepreg, and the carbon fiber 4 was used as the reinforcing fiber of the thermosetting prepreg.

(Examples 2-8)

A composite prepreg was obtained in the same manner as in Example 2-1 except that the carbon fiber 5 was used as the reinforcing fiber of the thermoplastic prepreg, and the carbon fiber 2 was used as the reinforcing fiber of the thermosetting prepreg.

<Consideration>

Comparison of Examples 1-1 to 1-7 and Comparative Examples 1-1 to 1-3 showed that the prepreg having excellent adhesion strength between the thermoplastic resin layer and the thermosetting resin layer and good fiber dispersibility achieved excellent mechanical characteristics and a large effect on handleability.

In Example 1-1, it was shown that the present invention can be applied even when the reinforcing fiber is a woven fabric. In Example 1-2, it was clear that the tensile strength of the molded body is improved by using reinforcing fibers oriented in one direction as the reinforcing fibers, and it was shown that the present invention can be applied even when the kinds of reinforcing fibers contained in the thermoplastic resin layer and the kinds of reinforcing fibers contained in the thermosetting resin layer are different. Further, comparison between Example 1-2 and Example 1-3 showed that mechanical characteristics were further improved and the difference in linear expansion coefficient between the thermoplastic resin layer and the thermosetting resin layer was reduced by uniforming the reinforcing fibers to carbon fibers, and therefore warpage was reduced and handleability was further improved. In comparison between Examples 1-4 and 1-5 and Comparative Example 1-2, in a case where a thermoplastic resin having a melting point higher than about 180°C, which is the upper limit of the process temperature range of the thermosetting resin such as PEKK or PA, is used, when the thermoplastic resin is heated at a temperature equal to or higher than the melting point of the thermoplastic resin for a long time to be integrated, the thermosetting resin undergoes a decomposition reaction and the adhesion strength is significantly reduced in Comparative Example 1-2 obtained by the method [I] for producing a thermoplastic prepreg. The prepreg obtained at this time not only has poor mechanical characteristics, but also has poor handleability because the thermoplastic resin layer and the thermosetting resin layer are immediately peeled off. However, it was shown that it is possible to obtain a prepreg in which a thermoplastic resin layer and a thermosetting resin layer are firmly in close contact with each other by applying a production method in which a thermoplastic prepreg is used as a semipreg as in Examples 1-4 and 1-5. Further, comparison between Example 1-6 and Comparative Example 1-3 showed that even when unmodified polypropylene having low adhesion to an epoxy resin was used, a composite prepreg was able be obtained by using a thermoplastic prepreg as a semipreg and impregnating a resin unimpregnated part of the semipreg with a thermosetting resin.

In Examples 2-1 to 2-8, as the surface free energy of the reinforcing fibers of the thermoplastic prepreg became larger, the adhesion strength was improved, and the fiber variation was improved by the selection of the sizing agent. Further, because of the improvement in the fiber variation, the warpage of the composite prepreg was reduced. In addition, it was found that further improvement of the adhesion strength is achieved by increasing the surface free energy of the reinforcing fibers of the thermosetting prepreg.

[Table 1]

| Thermoplastic prepreg | | Unit | Example 1-1 | Example 1-2 | Example 1-3 | Example 1-4 | Example 1-5 | Example 1-6 | Example 1-7 | Comparative Example 1-1 | Comparative Example 1-2 | Comparative Example 1-3 |
|---|---|---|---|---|---|---|---|---|---|---|---|---|
| | Reinforcing fiber (A) | Type | Carbon fiber woven fabric | Carbon fiber arranged in one directio n | Carbon fiber arranged in one directio n | Carbon fiber arranged in one directio n | Carbon fiber arranged in one directio n | Carbon fiber arranged in one directio n | Carbon fiber arranged in one directio n | Glass fiber woven fabric | Carbon fiber arranged in one direction | Carbon fiber arranged in one direction |
| | Basis weight | g/m$^2$ | 180 | 180 | 180 | 180 | 180 | 180 | 180 | 260 | 180 | 180 |
| | Thermoplastic resin (B) | Type | PP-2 | PP-2 | PP-2 | PEKK | PA | PP-1 | PP-2 | PP-2 | PA | PP-1 |
| | Basis weight | g/m$^2$ | 55 | 55 | 55 | 40 | 45 | 55 | 55 | 55 | 45 | 55 |
| | Production method | | [I] | [I] | [I] | [II] | [II] | [II] | [I] | [II] | [I] | [I] |
| Thermosetting prepreg | | | | | | | | | | | | | |
| | Reinforcing fiber (C) | Type | Glass fiber woven fabric | Glass fiber arranged in one directio n | Carbon fiber arranged in one directio n | Carbon fiber arranged in one directio n | Carbon fiber arranged in one directio n | Carbon fiber arranged in one directio n | Carbon fiber mat | | Carbon fiber arranged in one direction | Carbon fiber arranged in one direction |
| | Basis weight | g/m$^2$ | 260 | 260 | 180 | 180 | 180 | 180 | 180 | | 180 | 180 |
| | Thermosetting resin (D) | Type | EP | EP | EP | EP | EP | EP | EP | EP | EP | EP |
| | Basis weight | g/m$^2$ | 50 | 50 | 50 | 50 | 50 | 50 | 248 | 100 | 50 | 50 |
| | Production method | | [I] | [I] | [I] | [I] | [I] | [I] | [III] | [I] | [I] | [I] |

EP 4 082 739 B1

19

| Thermoplastic prepreg | Unit | Example 1-1 | Example 1-2 | Example 1-3 | Example 1-4 | Example 1-5 | Example 1-6 | Example 1-7 | Comparative Example 1-1 | Comparative Example 1-2 | Comparative Example 1-3 |
|---|---|---|---|---|---|---|---|---|---|---|---|
| Composite prepreg | | | | | | | | | | | |
| Adhesion strength | N/24mm | 7.4 | 4.5 | 10.3 | 23.0 | 34.4 | 4.9 | >6.2 | 17.6 | Peeled | Peeled |
| Fiber dispersibility in thickness direction | | Good | Good | Good | Good | Good | Good | Good | Poor | Good | Good |
| Coefficient of variation Q | | 9.4 | 2.2 | 2.7 | 4.9 | 4.3 | 4.3 | 2.5 | 13.5 | 3.2 | 2.0 |
| Tensile strength of molded body | MPa | 1085 | 1412 | 1668 | 1633 | 1547 | 1551 | 988 | 905 | 1114 | |
| Handleability | | B | B | A | A | A | A | A | C | C | C |
| Warpage amount | mm | 32.0 | 8.6 | 3.5 | 4.9 | 5.2 | 2.8 | 1.1 | 43.7 | Peeled | Peeled |

EP 4 082 739 B1

[Table 2]

| | | Unit | Example 2-1 | Example 2-2 | Example 2-3 | Example 2-4 | Example 2-5 | Example 2-6 | Example 2-7 | Example 2-8 |
|---|---|---|---|---|---|---|---|---|---|---|
| Thermoplastic prepreg | | | | | | | | | | |
| Reinforcing fiber (A) | Type | Type | Carbon fiber 3 | Carbon fiber 4 | Carbon fiber 2 | Carbon fiber 5 | Carbon fiber 6 | Carbon fiber 7 | Carbon fiber 5 | Carbon fiber 5 |
| | Surface free energy | mJ/m² | 9.0 | 32.0 | 20.0 | 18.0 | 32.0 | 33.0 | 18.0 | 18.0 |
| | Basis weight | g/m² | 180 | 180 | 180 | 180 | 180 | 180 | 180 | 180 |
| Thermoplastic resin (B) | Type | Type | PP-2 | PP-2 | PP-2 | PP-2 | PP-2 | PP-2 | PP-2 | PP-2 |
| | Basis weight | g/m² | 55 | 55 | 55 | 55 | 55 | 55 | 55 | 55 |
| Production method | | - | [I] | [I] | [I] | [I] | [I] | [I] | [I] | [I] |
| Thermosetting prepreg | | | | | | | | | | |
| Reinforcing fiber (C) | Type | Type | Carbon fiber 3 | Carbon fiber 3 | Carbon fiber 3 | Carbon fiber 3 | Carbon fiber 3 | Carbon fiber 3 | Carbon fiber 4 | Carbon fiber 2 |
| | Surface free energy | mJ/m² | 9.0 | 9.0 | 9.0 | 9.0 | 9.0 | 9.0 | 32.0 | 20.0 |
| | Basis weight | g/m² | 180 | 180 | 180 | 180 | 180 | 180 | 180 | 180 |
| Thermosetting resin (D) | Type | Type | EP | EP | EP | EP | EP | EP | EP | EP |
| | Basis weight | g/m² | 50 | 50 | 50 | 50 | 50 | 50 | 50 | 50 |
| Production method | | - | [I] | [I] | [I] | [I] | [I] | [I] | [I] | [I] |
| Composite prepreg | | | | | | | | | | |
| Adhesion strength | | N/10mm | 9.0 | 25.8 | 23.8 | 17.6 | 11.5 | 13.5 | 36.1 | 35.7 |
| Fiber dispersibility in thickness direction | | - | Good | Good | Good | Good | Good | Good | Good | Good |
| Coefficient of variation Q | | % | 9.4 | 2.8 | 3.2 | 0.6 | 4.1 | 4.1 | 0.8 | 0.5 |
| Warpage amount | | mm | 7.3 | 6.6 | 4.2 | 1.5 | 3.7 | 3.1 | 1.3 | 1.0 |

The composite prepreg and fiber-reinforced composite material of the present invention are preferably used in aircraft structural members, wind turbine blades, automobile external plates, computer applications such as IC trays and housings for notebook computers, and in sports applications such as golf shafts and tennis rackets.

DESCRIPTION OF REFERENCE SIGNS

1: Composite prepreg or fiber-reinforced plastic molded body
2: Reinforcing fiber
3: Thermoplastic resin or thermosetting resin
4: Orientation direction of any reinforcing fibers
5: Observation cross section
6: Cross-sectional image
7: Reinforcing fiber
8: Thermoplastic resin layer
9: Thermosetting resin layer
10: Interface
11: Reference line
12: Vertical base line
13: Interface curve
14: Cross-sectional image
15: Prepreg surface
16: Thickness of thermoplastic resin layer
17: Another thermoplastic resin layer
18: Thickness of thermosetting resin layer

**Claims**

1.  A composite prepreg in which reinforcing fibers are impregnated with a thermoplastic resin and an uncured thermosetting resin, and a thermoplastic resin layer and an uncured thermosetting resin layer that form an interface and are joined to each other are formed,

    wherein the thermoplastic resin layer is present on at least one surface of the composite prepreg, and the thermoplastic resin layer contains continuous reinforcing fibers,
    reinforcing fibers are distributed in a region of 80% or more of a thickness of each layer of the thermoplastic resin layer and the thermosetting resin layer in a cross section perpendicular to a plane direction, and
    an adhesion strength between the thermoplastic resin layer and the thermosetting resin layer is 1 N/24 mm or more, wherein the adhesion strength is measured according to JIS Z0237 (2009).

2.  The composite prepreg according to claim 1, wherein a volume content of the reinforcing fibers in the thermoplastic resin layer is 10% or more.

3.  The composite prepreg according to claim 1 or 2, wherein a coefficient of variation Q for a fiber content of the reinforcing fibers per unit section of 0.05 mm square in the thermoplastic resin layer is 40% or less.

4.  The composite prepreg according to any one of claims 1 to 3, wherein the reinforcing fibers are carbon fibers.

5.  The composite prepreg according to any one of claims 1 to 4, wherein the uncured thermosetting resin layer contains continuous reinforcing fibers.

6.  The composite prepreg according to any one of claims 1 to 5, wherein as the reinforcing fibers contained in the thermoplastic resin layer, reinforcing fibers having a surface free energy of 10 to 50 mJ/m$^2$ as measured by a Wilhelmy plate method are used.

7.  The composite prepreg according to any one of claims 1 to 6, wherein in the thermoplastic resin layer and the uncured thermosetting resin layer, reinforcing fibers oriented in one direction are present in a form of being arranged in one layer or a plurality of layers.

8. The composite prepreg according to any one of claims 1 to 7, wherein the reinforcing fibers contained in the thermoplastic resin layer and the uncured thermosetting resin layer are the same.

9. The composite prepreg according to any one of claims 1 to 8, wherein when a cross section that forms an angle of 45 degrees with respect to an orientation direction of the continuous reinforcing fibers and is perpendicular to the plane direction of the prepreg is observed, a curve formed by an interface between the uncured thermosetting resin layer and the thermoplastic resin in the cross section has a roughness average length RSm of 100 μm or less and a roughness average height Rc of 3.5 μm or more defined by JIS B0601 (2013).

10. A method for producing a composite prepreg in which reinforcing fibers are impregnated with a thermoplastic resin and an uncured thermosetting resin, the method comprising:

either (i) stacking an uncured thermosetting prepreg in which reinforcing fibers are impregnated with an uncured thermosetting resin to a thermoplastic semipreg in which continuous reinforcing fiber are impregnated with a thermoplastic resin with an unimpregnated region left on a surface thereof, in such a manner that the uncured thermosetting prepreg is in contact with the unimpregnated region of the thermoplastic semipreg; and heating and pressurizing the uncured thermosetting prepreg and the thermoplastic semipreg; or (ii) stacking an uncured thermosetting prepreg in which reinforcing fibers are impregnated with an uncured thermosetting resin to a thermoplastic prepreg in which continuous reinforcing fibers are impregnated with a thermoplastic resin having a melting temperature of 180°C or less; and heating and pressurizing the uncured thermosetting prepreg and the thermoplastic prepreg in a curing reaction temperature range of the uncured thermosetting resin and at a melting temperature of the thermoplastic resin or more.

**Patentansprüche**

1. Verbundstoff-Prepreg, in dem Verstärkungsfasern mit einem thermoplastischen Harz und einem ungehärteten duroplastischen Harz imprägniert sind und eine Schicht aus thermoplastischem Harz und eine Schicht aus ungehärtetem duroplastischem Harz ausgebildet sind, die eine Grenzfläche bilden und miteinander verbunden sind,

wobei die Schicht aus thermoplastischem Harz auf zumindest einer Oberfläche des Verbundstoff-Prepregs vorhanden ist und die Schicht aus thermoplastischem Harz Endlos-Verstärkungsfasern enthält, wobei Verstärkungsfasern in einem Bereich von 80 % oder mehr einer Dicke jeder Schicht aus der Schicht aus thermoplastischem Harz und der Schicht aus duroplastischem Harz in einem Querschnitt senkrecht zur Ebenenrichtung verteilt sind und die Haftfestigkeit zwischen der Schicht aus thermoplastischem Harz und der Schicht aus duroplastischem Harz 1 N/24 mm oder mehr beträgt, wobei die Haftfestigkeit gemäß JIS Z0237 (2009) gemessen wird.

2. Verbundstoff-Prepreg nach Anspruch 1, wobei der Volumengehalt der Verstärkungsfasern in der Schicht aus thermoplastischem Harz 10 % oder mehr beträgt.

3. Verbundstoff-Prepreg nach Anspruch 1 oder 2, wobei der Variationskoeffizient Q für den Fasergehalt der Verstärkungsfasern pro Einheitsabschnitt von 0,05 mm² in der Schicht aus thermoplastischem Harz 40 % oder weniger beträgt.

4. Verbundstoff-Prepreg nach einem der Ansprüche 1 bis 3, wobei die Verstärkungsfasern Kohlenstofffasern sind.

5. Verbundstoff-Prepreg nach einem der Ansprüche 1 bis 4, wobei die Schicht aus ungehärtetem duroplastischem Harz Endlos-Verstärkungsfasern enthält.

6. Verbundstoff-Prepreg nach einem der Ansprüche 1 bis 5, wobei Verstärkungsfasern, die eine nach der Wilhelmy-Platten-Methode gemessene freie Energie an der Oberfläche von 10 bis 50 mJ/m² aufweisen, als die Verstärkungsfasern verwendet werden, die in der Schicht aus thermoplastischem Harz enthalten sind.

7. Verbundstoff-Prepreg nach einem der Ansprüche 1 bis 6, wobei in der Schicht aus thermoplastischem Harz und der Schicht aus ungehärtetem duroplastischem Harz Verstärkungsfasern, die in eine Richtung ausgerichtet sind, in einer Form vorhanden sind, in der sie in einer Schicht oder einer Vielzahl von Schichten angeordnet sind.

8. Verbundstoff-Prepreg nach einem der Ansprüche 1 bis 7, wobei die Verstärkungsfasern, die in der Schicht aus thermoplastischem Harz und der Schicht aus ungehärtetem duroplastischem Harz enthalten sind, dieselben sind.

9. Verbundstoff-Prepreg nach einem der Ansprüche 1 bis 8, wobei, wenn ein Querschnitt, der zu der Ausrichtungsrichtung der Endlos-Verstärkungsfasern einen Winkel von 45° bildet und senkrecht zur Ebenenrichtung des Prepregs steht, betrachtet wird, eine Kurve, die durch die Grenzfläche zwischen der Schicht aus ungehärtetem duroplastischem Harz und dem thermoplastischen Harz in dem Querschnitt eine mittlere Rauheitslänge RSm von 100 μm oder weniger und eine mittlere Rauheitshöhe Rc von 3,5 μm oder mehr aufweist, wie durch JIS B0601 (2013) definiert wird.

10. Verfahren zur Herstellung eines Verbundstoff-Prepregs, in dem Verstärkungsfasern mit einem thermoplastischen Harz und einem ungehärteten duroplastischen Harz imprägniert sind, wobei das Verfahren Folgendes umfasst: entweder

(i) das Stapeln eines ungehärteten duroplastischen Prepregs, in dem Verstärkungsfasern mit einem ungehärteten duroplastischen Harz imprägniert sind, auf ein thermoplastisches Semipreg, in dem Endlos-Verstärkungsfasern mit einem thermoplastischen Harz imprägniert sind, wobei ein nichtimprägnierter Bereich auf einer Oberfläche davon so ausgelassen wird, dass das ungehärtete duroplastische Prepreg mit dem nichtimprägnierten Bereich des thermoplastischen Semipregs in Kontakt steht; und das Erhitzen und Unter-Druck-Setzen des ungehärteten duroplastischen Prepregs und des thermoplastischen Semipregs; oder

(ii) das Stapeln eines ungehärteten duroplastischen Prepregs, in dem Verstärkungsfasern mit einem ungehärteten duroplastischen Harz imprägniert sind, auf ein thermoplastisches Prepreg, in dem Endlos-Verstärkungsfasern mit einem thermoplastischen Harz mit einer Schmelztemperatur von 180 °C oder weniger imprägniert sind; und

das Erhitzen und Unter-Druck-Setzen des ungehärteten duroplastischen Prepregs und des thermoplastischen Prepregs in einem Temperaturbereich der Härtungsreaktion des ungehärteten duroplastischen Harzes und bei der Schmelztemperatur des thermoplastischen Harzes oder darüber.

## Revendications

1. Préimprégné composite dans lequel des fibres de renforcement sont imprégnées d'une résine thermoplastique et d'une résine thermodurcissable non durcie, et une couche de résine thermoplastique et une couche de résine thermodurcissable non durcie, qui forment une interface et sont jointes l'une à l'autre, sont formées,

dans lequel la couche de résine thermoplastique est présente sur au moins une surface du préimprégné composite, et la couche de résine thermoplastique contient des fibres de renforcement continues, des fibres de renforcement sont réparties dans une région de 80 % ou plus d'une épaisseur de chaque couche de la couche de résine thermoplastique et de la couche de résine thermodurcissable dans une section transversale perpendiculaire à une direction plane, et une force d'adhérence entre la couche de résine thermoplastique et la couche de résine thermodurcissable est de 1 N/24 mm ou plus, dans lequel la force d'adhérence est mesurée selon JIS Z0237 (2009).

2. Préimprégné composite selon la revendication 1, dans lequel une teneur volumique des fibres de renforcement dans la couche de résine thermoplastique est de 10 % ou plus.

3. Préimprégné composite selon la revendication 1 ou 2, dans lequel un coefficient de variation Q pour une teneur en fibres des fibres de renforcement par section unitaire de 0,05 mm$^2$ dans la couche de résine thermoplastique est de 40 % ou moins.

4. Préimprégné composite selon l'une quelconque des revendications 1 à 3, dans lequel les fibres de renforcement sont des fibres de carbone.

**5.** Préimprégné composite selon l'une quelconque des revendications 1 à 4, dans lequel la couche de résine thermodurcissable non durcie contient des fibres de renforcement continues.

**6.** Préimprégné composite selon l'une quelconque des revendications 1 à 5, dans lequel, en tant que fibres de renforcement contenues dans la couche de résine thermoplastique, des fibres de renforcement présentant une énergie libre de surface de 10 à 50 mJ/m$^2$ telle que mesurée par un procédé à plaque de Wilhelmy sont utilisées.

**7.** Préimprégné composite selon l'une quelconque des revendications 1 à 6, dans lequel dans la couche de résine thermoplastique et la couche de résine thermodurcissable non durcie, des fibres de renforcement orientées dans une direction sont présentes sous la forme d'une disposition en une couche ou une pluralité de couches.

**8.** Préimprégné composite selon l'une quelconque des revendications 1 à 7, dans lequel les fibres de renforcement contenues dans la couche de résine thermoplastique et la couche de résine thermodurcissable non durcie sont les mêmes.

**9.** Préimprégné composite selon l'une quelconque des revendications 1 à 8, dans lequel, lorsqu'une section transversale qui forme un angle de 45 degrés par rapport à une direction d'orientation des fibres de renforcement continues et qui est perpendiculaire à la direction du plan du préimprégné est observée, une courbe formée par une interface entre la couche de résine thermodurcissable non durcie et la résine thermoplastique dans la section transversale présente une longueur moyenne de rugosité RSm de 100 $\mu$m ou moins et une hauteur moyenne de rugosité Rc de 3,5 $\mu$m ou plus, définies par JIS B0601 (2013).

**10.** Procédé de production d'un préimprégné composite dans lequel des fibres de renforcement sont imprégnées d'une résine thermoplastique et d'une résine thermodurcissable non durcie, le procédé comprenant les étapes consistant à :

soit (i) empiler un préimprégné thermodurcissable non durci dans lequel des fibres de renforcement sont imprégnées d'une résine thermodurcissable non durcie sur un semi-imprégné thermoplastique dans lequel des fibres de renforcement continues sont imprégnées d'une résine thermoplastique avec une région non imprégnée laissée sur une surface de celui-ci, de telle manière que le préimprégné thermodurcissable non durci soit en contact avec la région non imprégnée du semi-imprégné thermoplastique ; et
chauffer et mettre sous pression le préimprégné thermodurcissable non durci et le semi-imprégné thermoplastique ; ou
(ii) empiler un préimprégné thermodurcissable non durci dans lequel des fibres de renforcement sont imprégnées d'une résine thermodurcissable non durcie sur un préimprégné thermoplastique dans lequel des fibres de renforcement continues sont imprégnées d'une résine thermoplastique présentant une température de fusion de 180°C ou moins ; et
chauffer et mettre sous pression le préimprégné thermodurcissable non durci et le préimprégné thermoplastique dans une plage de température de réaction de durcissement de la résine thermodurcissable non durcie, et à une température de fusion de la résine thermoplastique, ou plus.

【Fig.1】

【Fig. 2】

【Fig. 3】

**REFERENCES CITED IN THE DESCRIPTION**

**Patent documents cited in the description**

- JP 10138354 A
- WO 2014103658 A
- JP 2006044261 A
- JP 2019038939 A